# EUROPÄISCHE PATENTSCHRIFT

(11) **EP 1 813 145 B1**
(45) Veröffentlichungstag und Bekanntmachung des Hinweises auf die Patenterteilung: **18.03.2009**
(21) Anmeldenummer: 06126400.8
(22) Anmeldetag: 18.12.2006
(51) Int. Cl.: A01F 15/07

(54) **Vorrichtung zum Umhüllen eines Ballens mit einer Hüllbahn und Ballenpresse**
Device for wrapping a bale and baler
Dispositif pour envelopper une balle et presse à balles

(30) Priorität: 26.01.2006 DE 102006003690
(43) Veröffentlichungstag der Anmeldung: 01.08.2007
(73) Patentinhaber: Deere & Company, Moline, IL 61265-8098 (US)
(72) Erfinder: Viaud, Jean, 70100, Gray (FR)
(74) Vertreter: Löser, Iris

(56) Entgegenhaltungen:
- EP-A1- 1 186 562
- DE-A1- 3 634 571
- DE-A1- 19 720 489
- US-A1- 4 366 665
- US-A1- 4 407 113
- US-A1- 5 729 953

## Beschreibung

Die Erfindung betrifft eine Vorrichtung zum Umhüllen eines Ballens mit einer Hüllbahn, mit einem Vortriebselement, vorzugsweise einer Vortriebswalze, welches die Hüllbahn von einem Vorrat, vorzugsweise in der Art einer Rolle, abzieht, und einer mit dem Vortriebselement wirksam verbundenen Kupplungseinrichtung, und eine Ballenpresse mit einer solchen Vorrichtung.

Die DE-A1-197 20 489 zeigt eine Ballenpresse für landwirtschaftliches.Erntegut mit einer Abwickelstation für bahnförmiges Umhüllmaterial. Die Abwickelstation weist eine als nach dem Fliehkraftprinzip wirkende Bremseinrichtung als Geschwindigkeitsregeleinrichtung auf, so dass die Bahn des Umhüllmaterial während des Umwickelns des Rundballens und während des Abschneidevörganges unter einer vorbestimmten Bahnspannung steht.

Die DE-A1-36 34 571 zeigt eine Großballenpresse für landwirtschaftliches Erntegut, bei welcher der fertige Ballen zwecks Formfixierung von einer Mantelbahn umschlungen werden soll. Eine die Mantelbahn vorziehende Walze ist über einen Riemen mit einer der angetriebenen Wickelelemente der Ballenpresse bedarfsweise verbunden.

Das der Erfindung zugrunde liegende Problem wird darin gesehen, dass eine derartige Vorrichtung zum Umhüllen eines Ballens sehr aufwändig ist.

Dieses Problem wird erfindungsgemäß durch die Lehre der Patentansprüche 1 bzw. 7 gelöst, wobei in den weiteren Patentansprüchen Merkmale aufgeführt sind, die die Lösung in vorteilhafter Weise weiterentwickeln.

Auf diese Weise wird eine Vorrichtung zum Umhüllen eines Ballens mit einer Hüllbahn, mit einem Vortriebselement, welches die Hüllbahn von einem Vorrat, vorzugsweise in der Art einer Rolle, abzieht, und einer mit dem Vortriebselement wirksam verbundenen Kupplungseinrichtung vorgeschlagen. Bei dem Vortriebselement handelt es sich vorzugsweise um eine rotierend antreibbare Vortriebswalze. Es sind aber auch andere Ausführungsformen denkbar. Die Kupplungseinrichtung ist dafür eingerichtet, eine auf die durch den Ballen ergriffene Hüllbahn wirkende Kraft zumindest im Wesentlichen konstant zu halten, so dass die Hüllbahn den Ballen unabhängig von der tatsächlichen Umfangsgeschwindigkeit und somit der durch ihn auf die Hüllbahn ausgewirkten Kraft, welche von dem verarbeiteten Erntegut, dessen Zustand, beispielsweise seiner Feuchte, und/oder den herrschenden Umgebungsbedingungen abhängen, in optimaler Art und Weise umhüllen kann. Die Vorrichtung kann die Kraft regeln bzw. steuern.

Wird das Vortriebselement mit einer Geschwindigkeit angetrieben, die geringer ist als die Umfangsgeschwindigkeit des Ballens, so kann dadurch ein Dehnen oder Spannen der einenends durch den Ballen ergriffenen Hüllbahn erzielt werden, wodurch diese sich dicht an den Ballen anlegen kann.

Wie bereits angesprochen, kann die Umfangsgeschwindigkeit des Ballens von unterschiedlichen Faktoren abhängen. Insbesondere bei trockenem und/oder sprödem Erntegut liegt sie häufig weitaus niedriger als dies theoretisch angenommen wird. Um eine ausreichende Dehnung oder Spannung der Hüllbahn zu erzielen, kann vorgesehen sein, dass die Umfangsgeschwindigkeit des Vortriebselements die Umfangsgeschwindigkeit des Ballens um mehr als 10% vorzugsweise aber um circa 30% oder sogar mehr unterschreitet.

Ist die Kupplungseinrichtung in der Art einer Rutschkupplung ausgebildet ist, so kann diese durchrutschen, sobald an der Hüllbahn eine vorbestimmte Kraft anliegt. Es wird dadurch eine zu starke Dehnung und/oder Belastung der Hüllbahn verhindert und dies auch dann, wenn die Differenz der Umfangsgeschwindigkeiten sehr hoch gewählt sein sollte.

Es kann vorgesehen sein, dass die Kraft fest vorgegeben ist. Ein flexibles Reagieren auf die jeweiligen Bedingungen bzw. Anforderungen wird aber besonders dann möglich, wenn die Kraft einstellbar ist. Ein Einstellen der Kraft kann beispielsweise dadurch erfolgen, dass eine Vorspannung der Kupplungseinrichtung verändert werden kann. Bei einer Rutschkupplung beispielsweise kann dadurch bestimmt werden, bei welcher Krafteinwirkung die Kupplung anfängt zu rutschen bzw. durchrutscht, da der Reibwert der Kupplung erreicht bzw. überschritten wird. Die jeweilige Vorspannung kann durch ein geeignetes Federmittel, beispielsweise in der Art einer Druckfeder, oder jeden anderen geeigneten Energiespeicher, beispielsweise in hydraulischer oder pneumatischer Weise aufgebracht werden.

Stellt die Kupplungseinrichtung eine wirksame Verbindung zwischen einer Antriebseinrichtung und dem Vortriebselement her, so kann die durch die Kupplungseinrichtung übertragene Kraft, von der auftretenden Kraft bzw. der Umfangsgeschwindigkeit des Ballens derart abhängen, dass sie dieser selektiv entgegenwirkt oder diese zulässt, so dass die auf die Hüllbahn wirkende Kraft zumindest im Wesentlichen konstant gehalten wird.

Die Antriebseinrichtung kann ein Getriebe bzw. jede andere zur Übertragung von Kraft bzw. Bewegung geeignete Einrichtung aufweisen. An Ballenpressen, an denen eine erfindungsgemäße Vorrichtung üblicherweise Anwendung finden wird, finden sich bereits häufig Zugmittelgetriebe, unter anderem in der Art von Kettengetrieben und insbesondere Riementriebe.

Ist ein Zugmittelgetriebe und insbesondere ein Riementrieb vorsehen, so kann die Kupplungseinrichtung zumindest mit einer Zugmittelscheibe des Riementriebs zusammenwirken und beispielsweise eine Kraft- bzw. Bewegungsübertragung von der Zugmittelscheibe an eine Antriebswelle derart zulassen, dass die auf die Hüllbahn wirkende Kraft konstant gehalten wird.

Eine Vorrichtung zum Umhüllen eines Ballens kann in der Industrie an Ballenpressen Verwendung finden, welche Ballen aus Papier, Abfällen, textilen Materialien etc. bilden. Besonders geeignet ist eine solche Vorrichtung aber zur Verwendung an landwirtschaftlichen Ballenpressen für Ballen aus landwirtschaftlichen Erntegütern, da diese üblicherweise an ein Zugfahrzeug angehängt sind und durch eine Bedienungsperson dieses Zugfahrzeugs überwacht werden müssen. Fehlfunktionen einer Umhüllungseinrichtung sind für diese Bedienungspersonen schwer festzustellen und werden häufig erst bei Auswurf des Ballens bemerkt.

In der Zeichnung ist ein nachfolgend näher beschriebenes Ausführungsbeispiel der Erfindung dargestellt. Es zeigt:
- Fig. 1: eine Ballenpresse mit einer Vorrichtung zum Umwickelns eines Ballens mit einer Hüllbahn,
- Fig. 2: die Vorrichtung aus Fig. 1 in einer genaueren Darstellung, mit einer Kupplungseinrichtung zum selektiven Antrieb eines Vortriebselements und
- Fig. 3: die Kupplungseinrichtung aus Fig. 2.

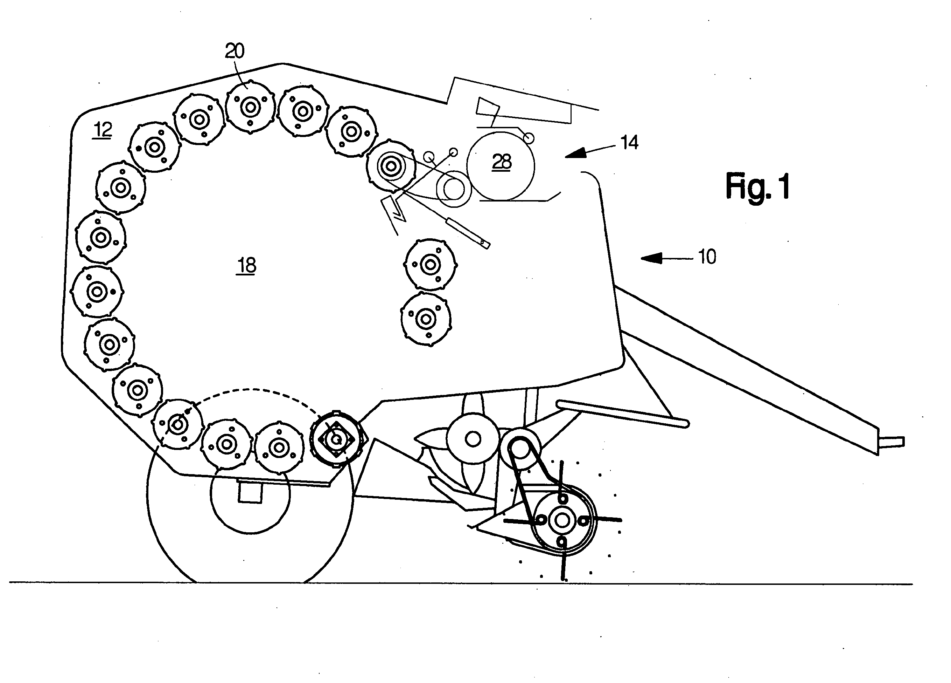

Figur 1 zeigt eine Ballenpresse 10 von im Wesentlichen herkömmlicher Bauart mit einem Pressraum 12. Entsprechend dem vorliegenden Ausführungsbeispiel ist darüber hinaus eine Vorrichtung 14 zum Umwickeln eines in dem Pressraum 12 gebildeten Ballens 16 mit einer Hüllbahn 18 vorgesehen.

Bei der Ballenpresse 10 kann es sich um eine bekannte Bauart handeln, d.h. mit einem Pressraum 12 konstanter oder variabler Größe, welcher ausschließlich oder in Kombination von Riemen, Ketten, oder wie in dem Ausführungsbeispiel von Walzen 20 umgeben wird.

Eine derartige Ballenpresse 10 kann in der Landwirtschaft zum Bilden von Ballen 16 aus Erntegut, wie z.B. Stroh, Heu oder Gras eingesetzt werden. Es ist aber auch eine Verwendung in industriellen Bereichen denkbar.

Die Vorrichtung 14 ist in der vorliegenden Ausführungsform an der Vorderseite der Ballenpresse 10 vorgesehen. Die Hüllbahn 18 wird durch einen Spalt zwischen zwei benachbarten Walzen 20 hindurch dem Pressraum 12 zugeführt, wo sie von dem in Drehung versetzten Ballen 16 mitgenommen wird. Die Vorrichtung 14 kann in einem mittleren Bereich der Ballenpresse 10 oder auch vor oder oberhalb des Pressraums 12 angeordnet sein.

Mittels der Hüllbahn 18 wird der Ballen 16 gebunden und somit daran gehindert, nach einem Verlassen der Ballenpresse 10 auseinander zu fallen. Bei der Hüllbahn 18 kann es sich um Folie, Netz, Gewebe, Papier oder dergleichen handeln.

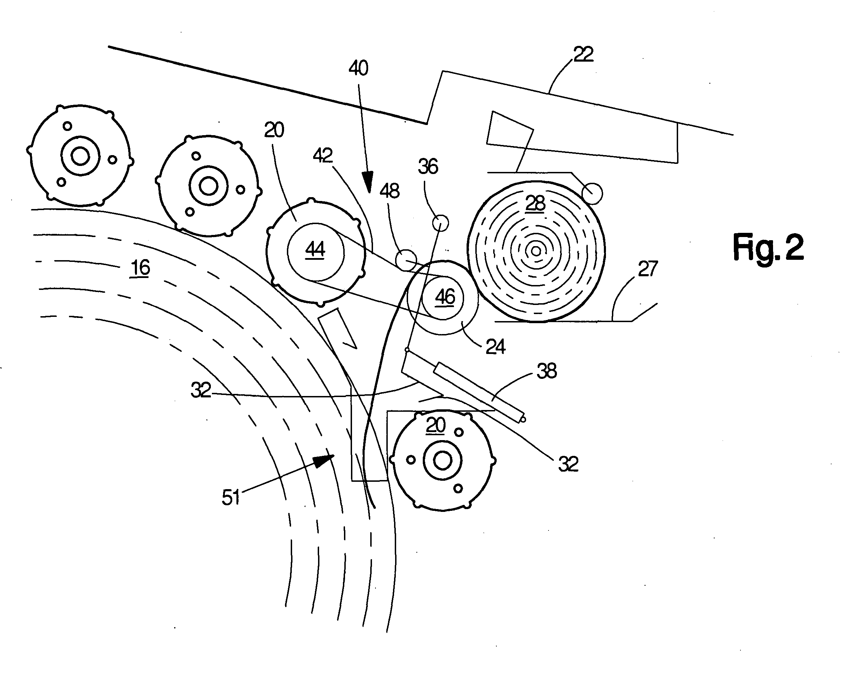

Es wird nun auch auf Figur 2 Bezug genommen, in der die Ballenpresse 10 nur ausschnittsweise und die Vorrichtung 14 vergrößert dargestellt ist.

Die Vorrichtung 14 weist ein Gehäuse 22, eine zukünftig als Vortriebselement 24 bezeichnete Vortriebswalze und eine Trenneinrichtung 26 auf. Das Gehäuse 22 enthält einen Fachboden 27, auf welchem die Hüllbahn 18 als Rolle 28 gelagert wird. Der Fachboden 27 kann auch derart ausgebildet sein, dass er mehrere Rollen 28 bevorratet und/oder Stufen oder Mulden zu deren Lagesicherung aufweist.

Das Vortriebselement 24 ist auf seiner Umfangsfläche mit einem Belag hohen Reibwerts versehen und kann in Drehung versetzt werden. Die Drehung hilft anfänglich, die Hüllbahn 18 von der Rolle 28 abzuziehen. Die Rolle 28 befindet sich oberhalb der Auflageebene des Fachbodens 27 und kommt in ihrer Betriebsstellung mit einem Bereich, der etwa einer 6 bis 9 Uhr Stellung entspricht, an der Vortriebswalze 24 zur Anlage. Durch das Vortriebselement 24 wird die Hüllbahn 18 von der Rolle 28 abgezogen und durch den Spalt zwischen den benachbarten Walzen 20 in den Pressraum 12 geführt. Bei einem ordnungsgemäßen Betrieb wird die Hüllbahn 18 von dem rotierenden Ballen 16 erfasst und hüllt diesen ein.

Die Trenneinrichtung 26 weist ein Messer 32 auf, welches auf einem Arm 34 um ein Lager 36 schwenkbar befestigt ist, um in den Weg der Hüllbahn 18 einzutreten und diese zu durchtrennen bzw. ein Abreißen zu bewirken, wenn der Einhüllvorgang abgeschlossen ist. Ein Verschwenken des Messers 32 erfolgt über einen Hydraulikmotor 38, welcher mittels einer bekannten Steuer- bzw. Regeleinrichtung (ECU) betätigt wird.

Darüber hinaus ist mit dem Arm 34 ein weiterer Arm 48 schwenkbar verbunden, dessen Stellung ebenfalls von dem Hydraulikmotor 38 bestimmt wird. Im vorliegenden Ausführungsbeispiel ist an dem Arm 38 eine Leiteinrichtung 51 schwenkbar vorgesehen. Eine derartige Leiteinrichtung 51 kann der deutschen Patentanmeldung mit dem Aktenzeichen 102 26 797.9 vom 15.06.2002 entnommen werden, deren Offenbarung hiermit in die vorliegende Anmeldung einbezogen wird.

Befindet sich der Hydraulikmotor 38 in seiner eingefahrenen Stellung, so befindet sich das Messer 32 in einer derart verschwenkten Stellung, dass es den Lauf der Hüllbahn 18 nicht beeinflusst.

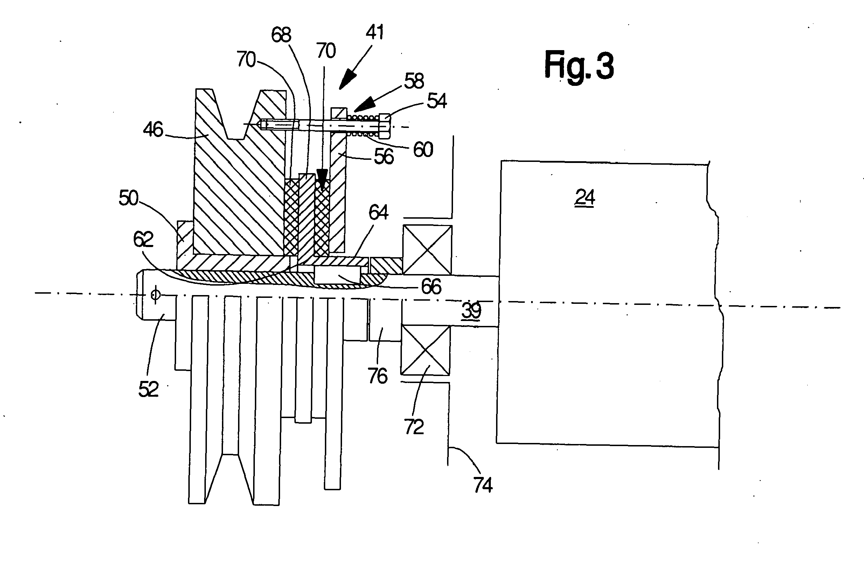

Das Vortriebselement 24 wirkt über eine Antriebswelle 39, mit der es fest verbunden ist, und eine Kupplungseinrichtung 41 (siehe Figur 3) mit einem Riementrieb 42 zusammen. Der Riementrieb 42 weist eine erste Zugmittelscheibe 44, welche mit einer der Walzen 20 zusammenwirkt, die von einem dargestellten Antrieb in Rotation versetzt werden kann, und eine zweite Zugmittelscheibe 46 auf, die drehbar auf die Antriebswelle 39 aufgesetzt ist. Der Riementrieb 40 weist weiter ein Zugmittel 42 auf, welches die Zugmittelscheiben 44, 46 umschlingt und das mit einer Spannrolle 48 derart zusammenwirkt, dass das Zugmittel 42 durch die Spannrolle 44 gespannt werden kann, um die zweite Zugmittelscheibe 46 in Rotation zu versetzen. Spannt die Spannrolle 48 das Zugmittel 42 nicht, so wird die zweite Zugmittelscheibe 46 durch das Zugmittel 42 nicht angetrieben.

Es wird nun auf Figur 3 Bezug genommen, in der das Vortriebselement 24, die Antriebswelle 39, die Kupplungseinrichtung 41 und die zweite Zugmittelscheibe 46 vergrößert dargestellt sind.

Die zweite Zugmittelscheibe 46 ist über ein Gleitlager 50 drehbar auf einen dem Vortriebselement 24 abgewandten Endbereich 52 der Antriebswelle aufgesetzt. Die zweite Zugmittelscheibe 46 ist über ein Sicherungsmittel 54, in der Art einer Schraube mit einer Kupplungsscheibe 56 verbunden, welche ebenfalls auf den Endbereich 52 aufgesetzt ist, aber nicht direkt mit der Antriebswelle 39 verbunden ist.

Das Sicherungsmittel 54 ist durch eine Aussparung 58 in der Kupplungsscheibe 56 gesteckt und wird durch eine, auf der Zugmittelscheibe 46 abgewandten Seite der Kupplungsscheibe 56 auf dem Sicherungsmittel 54 vorgesehenes Federelement 60 in der Art einer Druckfeder derart belastet, dass die Zugmittelscheibe 46 an der Kupplungsscheibe 56 anliegt.

Auf die Antriebswelle 39 ist weiter ein Kupplungselement 62 aufgesetzt, welches einen Lagerbereich 64 aufweist, der mit dem Endbereich 52 der Antriebswelle 39 mittels einer geeigneten Verbindung 66, beispielsweise in der Art einer Passfeder, drehfest verbunden ist.

Von dem Lagerbereich 64 erstreckt sich ein Kupplungsbereich 68 zwischen die Zugmittelscheibe 46 und die Kupplungsscheibe 56. Der Kupplungsbereich 68 ist sowohl auf seiner der Zugmittelscheibe 46 als auch auf seiner der Kupplungsscheibe 56 zugewandten Seite mit einem Reibbelag 70 versehen.

Aus Gründen der Vollständigkeit wird angeführt, dass sich die Antriebswelle 39 weiter durch ein Lager 72 in einer Seitenwand 74 des Pressraums 12 erstreckt und zwischen dem Lager 72 und dem Kupplungselement 62 eine Distanzbüchse 76 vorgesehen ist.

Im Folgenden soll auf die Funktionsweise der Vorrichtung 14 genauer eingegangen werden. Hierzu wird sowohl auf Fig. 1 als auch auf die Fig. 2 und 3 Bezug genommen.

Ist die Bildung des Ballens 16 in dem Pressraum 12 abgeschlossen, was in bekannter Art und Weise durch einen nicht dargestellten Sensor, welcher beispielsweise mechanisch oder optisch den Durchmesser des Ballens 16 bestimmt, ermittelt wird, wird die Vorrichtung 14 aktiviert. Dies geschieht, indem der Hydraulikmotor 38 von der Steuer- bzw. Regeleinrichtung (ECU) angesteuert, in seine in Fig. 2 dargestellte, eingefahrene Stellung gebracht wird.

Darüber hinaus liefert die Steuer- bzw. Regeleinrichtung (ECU) ein Steuersignal an eine nicht gezeigte Betätigungseinrichtung der Spannrolle 48. Aufgrund dieses Steuersignals spannt die Spannrolle 46 das Zugmittel 42, wodurch die zweite Zugmittelscheibe 46 in Rotation versetzt wird.

Die Zugmittelscheibe 46 wiederum wirkt sowohl über den ihr zugewandten Reibbelag 70 als auch indirekt über die Kupplungsscheibe 56 und den dieser zugewandten Reibbelag 70 auf das Kupplungselement 62 und nimmt diese mit bzw. versetzt das Kupplungselement 62 und somit die Antriebswelle 39 und das Vortriebselement 24 in Rotation.

Das nun rotierend angetriebene Vortriebselement 24 zieht die Hüllbahn 18 von der Rolle 28 ab und fördert diese in Richtung des Ballens 18. Die Leiteinrichtung 51 wirkt hierbei unterstützend, indem sie die Hüllbahn 18 an den Ballen 16 heranführt.

Wird die Hüllbahn 18 von dem rotierenden Ballen 18 ergriffen, so wirkt dieser eine Kraft auf die Hüllbahn 18 aus. Da es vorgesehen ist, dass der Riementrieb 40 das Vortriebselement 24 mit einer Geschwindigkeit antreibt, welche die Rotationsgeschwindigkeit um vorzugsweise circa 15 bis 30% oder auch mehr unterschreitet, wird die Hüllbahn 18 durch die Wirkung des Vortriebselements 24 gebremst und somit gedehnt bzw. gespannt, gleich welche Art von Erntegut verarbeitet wird bzw. in welchem Zustand sich dieses befindet. Dies ist wünschenswert, um zu bewirken, dass die Hüllbahn 18 sich dicht an den Ballen 16 anlegt und diesen fest umschließt.

Die Kupplungseinrichtung 41 bewirkt, dass die auf die Hüllbahn 18 durch den Ballen 16 ausgeübte Kraft und somit die Dehnung der Hüllbahn 18 unabhängig von der Rotationsgeschwindigkeit konstant bleibt. Übersteigt die ausgeübte Kraft einen vorgewählten Betrag, so beginnt das Kupplungselement 62 gegenüber der zweiten Riemenscheibe 46 und der Kupplungsscheibe 56 derart durchzurutschen, dass nur die vorgewählte Kraft auf die Hüllbahn 18 ausgewirkt und somit eine bestimmte Dehnung derselben erzielt wird.

Die auszuübende Kraft bzw. die gewünschte Dehnung kann dadurch verändert bzw. vorgewählt werden, dass das Sicherungsmittel 54 gegen die Wirkung der Feder mehr oder weniger in die zweite Zugmittelscheibe 46 eingeschraubt wird, so dass die Kupplungseinrichtung 41 in gewünschter Weise vorgespannt wird.

## Patentansprüche

1. Vorrichtung (14) zum Umhüllen eines Ballens (16) mit einer Hüllbahn, (18), mit einem Vortriebselement (24), vorzugsweise einer Vortriebswalze, welches die Hüllbahn (18) von einem Vorrat, vorzugsweise in der Art einer Rolle (28), abzieht, und einer mit dem Vortriebselement (24) wirksam verbundenen Kupplungseinrichtung (41), wobei die Kupplungseinrichtung (41) dazu eingerichtet ist, eine auf die durch den Ballen (16) ergriffene Hüllbahn (18) wirkende Kraft zumindest im Wesentlichen konstant zu halten, **dadurch gekennzeichnet, dass** das Vortriebselement (24) mit einer Umfangsgeschwindigkeit angetrieben wird, welche geringer ist als die Umfangsgeschwindigkeit des Ballens (16) und die Kupplungseinrichtung (41) in der Art einer Rutschkupplung ausgebildet ist.

2. Vorrichtung nach Anspruch 1, **dadurch gekennzeichnet, dass** die Umfangsgeschwindigkeit des Vortriebselements (24) die Umfangsgeschwindigkeit des Ballens (16) um mehr als 10%, vorzugsweise aber um circa 30% oder mehr unterschreitet.

3. Vorrichtung nach einem oder mehreren der vorherigen Ansprüche, **dadurch gekennzeichnet, dass** die Kraft einstellbar ist.

4. Vorrichtung nach einem oder mehreren der vorherigen Ansprüche, **dadurch gekennzeichnet, dass** die Kupplungseinrichtung (41) eine wirksame Verbindung zwischen einer Antriebseinrichtung und dem Vortriebselement (24) herstellen kann.

5. Vorrichtung nach Anspruch 4, **dadurch gekennzeichnet, dass** die Antriebseinrichtung einen Riementrieb (40) aufweist.

6. Vorrichtung nach Anspruch 5, **dadurch gekennzeichnet, dass** die Kupplungseinrichtung (41) zumindest mit einer Zugmittelscheibe (46) des Riementriebs (40) zusammenwirkt.

7. Ballenpresse (10) mit einer Vorrichtung (14) nach einem oder mehreren der vorherigen Ansprüche.

## Claims

1. Device (14) for wrapping a bale (16) with a wrapping web (18), with an advancing element (24), preferably an advancing roller, which pulls off the wrapping web (18) from a store, preferably in the manner of a role (28), and with a clutch mechanism (41) which is effectively connected to the advancing element (24), wherein the clutch mechanism (41) is arranged so as to keep a force acting on the wrapping web (18) grasped by the bale (16) such that it is at least substantially constant, **characterized in that** the advancing element (24) is driven at a peripheral speed which is lower than the peripheral speed of the bale (16), and the clutch mechanism (41) is designed in the manner of a slip clutch.

2. Device according to Claim 1, **characterized in that** the peripheral speed of the advancing element (24) is more than 10%, but preferably about 30% or more, slower than the peripheral speed of the bale (16).

3. Device according to one or more of the preceding claims, **characterized in that** the force is adjustable.

4. Device according to one or more of the preceding claims, **characterized in that** the clutch mechanism (41) can produce an effective connection between a drive mechanism and the advancing element (24).

5. Device according to Claim 4, **characterized in that** the drive mechanism has a belt drive (40).

6. Device according to Claim 5, **characterized in that** the clutch mechanism (41) interacts with at least one traction mechanism pulley (46) of the belt drive (40).

7. Baler (10) with a device (14) according to one or more of the preceding claims.

## Revendications

1. Dispositif (14) pour envelopper une balle (16), comprenant une enveloppe (18), comprenant un élément d'avance (24), de préférence un rouleau d'avance, qui tire l'enveloppe (18) d'une réserve, de préférence à la manière d'un rouleau (28), et un dispositif d'accouplement (41) connecté activement à l'élément d'avance (24), le dispositif d'accouplement (41) étant prévu pour maintenir au moins essentiellement constante une force agissant sur l'enveloppe (18) saisie par la balle (16), **caractérisé en ce que** l'élément d'avance (24) est entraîné avec une vitesse périphérique qui est inférieure à la vitesse périphérique de la balle (16), et le dispositif d'accouplement (41) est réalisé à la manière d'un accouplement à glissement.

2. Dispositif selon la revendication 1, **caractérisé en ce que** la vitesse périphérique de l'élément d'avance (24) est inférieure à la vitesse périphérique de la balle (16), de plus de 10%, de préférence toutefois d'environ 30% ou plus.

3. Dispositif selon l'une quelconque ou plusieurs des revendications précédentes, **caractérisé en ce que** la force est réglable.

4. Dispositif selon l'une quelconque ou plusieurs des revendications précédentes, **caractérisé en ce que** le dispositif d'accouplement (41) peut créer une connexion active entre un dispositif d'entraînement et l'élément d'avance (24).

5. Dispositif selon la revendication 4, **caractérisé en ce que** le dispositif d'entraînement présente un entraînement à courroie (40).

6. Dispositif selon la revendication 5, **caractérisé en ce que** le dispositif d'accouplement (41) coopère au moins avec une poulie de mécanisme de traction (46) de l'entraînement à courroie (40).

7. Presse à balles (10) comprenant un dispositif (14) selon l'une quelconque ou plusieurs des revendications précédentes.
